# EUROPÄISCHE PATENTANMELDUNG

(11) **EP 2 394 828 A1**
(43) Veröffentlichungstag der Anmeldung: **14.12.2011**
(21) Anmeldenummer: 11169065.7
(22) Anmeldetag: 08.06.2011
(51) Int. Cl.: B60G 21/05

(54) **Torsionsrohr für eine Verbundlenkerachse**

(30) Priorität: 10.06.2010 DE 102010029944
(71) Anmelder: Linde + Wiemann GmbH KG, 35863 Dilllenburg (DE)
(72) Erfinder: Medebach, Thomas, 35582 Wetzlar-Dudenhofen (DE); Gutermuth, Andreas, 35719 Angelburg (DE)
(74) Vertreter: Müller, Eckhard

(57) **Zusammenfassung**

Die Erfindung betrifft ein Torsionsrohr (3) für eine Verbundlenkerachse (1), das entlang seiner Längserstreckung zumindest einen Abschnitt (5, 6) aufweist, der so ausgebildet ist, dass bei Biegebelastung des Torsionsrohres (3) die Biegespannungen innerhalb des Abschnitts (5, 6) überall weitgehend gleich sind und/oder dass bei Torsionsbelastung des Torsionsrohres (3) die Torsionsspannungen innerhalb des Abschnittes (5, 6) überall weitgehend gleich sind.

## Beschreibung

Die Erfindung betrifft ein Torsionsrohr für eine Verbundlenkerachse.

Das Torsionsrohr einer Verbundlenkerachse muss eine große Biegesteifigkeit aufweisen, um einem Kippen der Räder um die Fahrzeuglängsachse entgegenzuwirken. Außerdem muss das Torsionsrohr einer Verbundlenkerachse eine ausreichende Torsionsfähigkeit aufweisen, um große Einfederwege der einzelnen Räder unabhängig voneinander zu ermöglichen.

Aus der DE 10 2007 052 632 A1 ist eine Verbundlenkerachse mit einem als Torsionsrohr ausgebildeten Querträger, der zwei jeweils an einem Längsträger befestigte rohrartige Enden aufweist, zwischen denen eine bereichsweise doppelwandige Längsrille eingeformt ist. Parallel zum Querträger verlaufend ist ein Stabilisator angeordnet, der direkt oder indirekt starr an den Längsträgern befestigt ist.

Aus EP 0 752 332 A1 ist eine Verbundlenker-Hinterachse mit einem Querträger bekannt, der verformte und nicht verformte Längenabschnitte aufweist. Es ist vorgesehen, die hoch spannungsbelasteten Übergangsbereiche zwischen den verformten und nicht verformten Längenabschnitten so zu gestalten, dass die auftretenden Spannungen über den gesamten Profilbereich gleichmäßig verteilt werden. Hierzu weist die Verbundlenker-Hinterachse an den Enden einen kreisrunden rohrförmigen und im mittleren Längenbereich doppelwandigen, U-förmigen Querträger auf, wobei die Abschnitte zwischen den kreisrunden Enden und dem mittleren Längenbereich kontinuierlich ineinander übergehen und wobei der Querträger endseitig des mittleren, bezüglich seiner horizontalen Mittellängsebene zueinander divergierende Schenkel aufweisenden U-förmigen Längenbereichs an dem bogenförmig ausgebildeten Steg mit nach innen oder nach außen gerichteten, abgerundete Ränder aufweisenden Einprägungen versehen ist. Aus DE 10 2008 017 208 A1 ist eine Verbundlenkerachse für ein Kraftfahrzeug mit zwei starren Längslenkern und einem die beiden Längslenker biegesteif, jedoch torsionselastisch miteinander verbindenden Torsionsprofil bekannt. Das Torsionsprofil umfasst einen Zwischenabschnitt mit einer ersten Profilform, die eine erste Torsionsrate aufweist und zwei Endabschnitte mit einer zweiten Profilform, die eine zweite Torsionsrate aufweist. Die zweite Torsionsrate ist größer als die erste Torsionsrate. Darüber hinaus sind zwei, die Endabschnitte mit dem Zwischenabschnitt verbindende Übergangsabschnitte vorgesehen, die eine zweite Profilform der Endabschnitte in die erste Profilform des Zwischenabschnitte überführende dritte Profilform aufweisen.

Aus DE 199 49 341 A1 ist eine Verbundlenker-Hinterachse für Kraftfahrzeuge bekannt. Diese umfasst zwei starre Längslenker mit jeweils einer Aufnahme für einen Radträger, zwischen die eine biegesteife, jedoch torsionsweiche aus einem zugeschnittenen beziehungsweise gestanzten Blech geformte Querstrebe angeordnet ist. Während die Endabschnitte der Querstrebe ein geschlossenes Profil aufweisen, ist das Profil der Querstrebe beabstandet zu ihren Enden zumindest abschnittsweise offen.

Aus DE 195 33 479 A1 ist eine Fahrzeugachse mit einem im wesentlichen quer zur Fahrzeuglängsachse verlaufenden Achsträger, der ein Profil aufweist, das biegesteif und torsionsweich ausgeführt ist, bekannt. Die Fahrzeugachse zeichnet sich dadurch aus, dass der Achsträger als ein Rohrkörper ausgeführt ist, der zumindest auf einem Längenabschnitt eine Aussparung aufweist.

Es ist die Aufgabe der vorliegenden Erfindung, ein Torsionsrohr für eine Verbundlenkerachse anzugeben, das bei geringerem Materialaufwand und/oder geringerem Fertigungsaufwand derart herstellbar ist, dass es zumindest die gleichen oder sogar verbesserte Eigenschaften hinsichtlich Biegesteifigkeit und Torsionssteifigkeit aufweist, wie die aus dem Stand der Technik bekannten Torsionsrohre.

Die Aufgabe wird durch ein Torsionsrohr gelöst, das dadurch gekennzeichnet ist, dass das Torsionsrohr entlang seiner Längserstreckung zumindest einen Abschnitt aufweist, der so ausgebildet ist, dass bei Biegebelastung des Torsionsrohres die Biegespannungen innerhalb des Abschnitts überall weitgehend gleich sind und/oder dass bei Torsionsbelastung des Torsionsrohres die Torsionsspannungen innerhalb des Abschnitts überall weitgehend gleich sind.

Erfindungsgemäß wurde erkannt, dass die aus dem Stand der Technik bekannten Torsionsrohre unnötigerweise weitgehend über ihre gesamte Längserstreckung dieselbe Querschnittsform und dieselbe Wandungsstärke aufweisen. Lediglich die Torsionsrohrenden sind zumeist anders aufgebaut als der Mittelteil, um die Torsionsrohre sicher und dauerhaft an den Längsträgern befestigen zu können, ohne dass es zu Brüchen bei Dauerbelastung kommt. Tatsächlich sind die auf das Torsionsrohr einwirkenden Biegebelastungen und Torsionsbelastungen jedoch nicht über die gesamte Längserstreckung des Torsionsrohres gleich. Demgemäß sind die bei denen aus dem Stand der Technik bekannten Torsionsrohren auftretenden Biegespannungen und Torsionsspannungen an unterschiedlichen Stellen des Torsionsrohres unterschiedlich. Da die hoch belasteten Bereiche jedoch genauso ausgebildet sind wie die weniger belasteten Bereiche hat dies zwangsläufig zur Folge, dass die weniger belasteten Bereiche folgerichtig stets überdimensioniert sind. Die vorliegende Erfindung vermeidet wirkungsvoll diesen unnötigen Mehraufwand an Material-, Arbeits- und Maschinenzeit.

Bei einer vorteilhaften Ausführungsform des erfindungsgemäßen Torsionsrohres ist demgemäß vorgesehen, dass das Torsionsrohres innerhalb des Abschnittes in dem die Biegespannungen und/oder die Torsionsspannungen überall weitgehend gleich sind, unterschiedliche Wandungsdicken aufweist. Beispielsweise kann vorgesehen sein, dass das Torsionsrohr innerhalb des Abschnitts und/oder innerhalb eines Unterabschnitts des Abschnitts - vorzugsweise kontinuierlich - zunehmende Wandungsdicken aufweist.

Alternativ oder zusätzlich kann vorgesehen sein, dass das Torsionsrohr innerhalb des Abschnitts unterschiedliche Durchmesser aufweist. Insbesondere kann vorgesehen sein, dass das Torsionsrohr innerhalb des Abschnitts und/oder innerhalb eines Unterabschnitts des Abschnitts - vorzugsweise kontinuierlich - zunehmende Durchmesser aufweist.

Es ist - alternativ oder zusätzlich - auch möglich, das Torsionsrohr derart auszubilden, dass es innerhalb des Abschnitts unterschiedliche Querschnittsformen aufweist. Insbesondere kann vorgesehen sein, dass das Torsionsrohr entlang der Längserstreckung des Abschnitts kontinuierlich ineinander übergehende Querschnittsformen aufweist.

Es kann insbesondere auch vorgesehen sein, dass das Torsionsrohr innerhalb des Abschnitts - zumindest auch - einen kreisförmigen Querschnitt aufweist.

Bei einer anderen vorteilhaften Ausführung weist das Torsionsrohr innerhalb des Abschnitts überall dieselbe Wandungsdicke bei sich entlang der Längserstreckung verändernden Durchmessern und/oder Querschnittsformen auf. Diese Ausführungsform insbesondere hat den Vorteil, dass das Torsionsrohr aus Flachmaterial durch Wickeln hergestellt werden kann.

Bei einer vorteilhaften Ausführungsform des erfindungsgemäßen Torsionsrohres ist der Abschnitt in dem die Biegespannungen und/oder die Torsionsspannungen bei Belastung überall weitgehend gleich sind, in der Mitte angeordnet.

Bei einer weiteren vorteilhaften Ausführungsform weist das Torsionsrohr zwei symmetrisch zur Mitte angeordnete Abschnitte auf, die so ausgebildet sind, dass bei Biegebelastung des Torsionsrohres die Biegespannungen innerhalb des Abschnitts überall weitgehend gleich sind und/oder dass bei Torsionsbelastung des Torsionsrohres jeweils die Torsionsspannungen innerhalb des Abschnitts überall weitgehend gleich sind.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

In der Zeichnung ist der Erfindungsgegenstand schematisch dargestellt und wird anhand der Figuren nachfolgend beschrieben, wobei gleiche oder gleichwirkende Elemente zumeist mit denselben Bezugszeichen versehen sind.

Dabei zeigen:
- Fig. 1: eine Verbundlenkerachse mit einem erfindungsgemäßen Torsionsrohr,
- Fig. 2: eine andere Verbundlenkerachse mit einem weiteren erfindungsgemäßen Torsionsrohr und

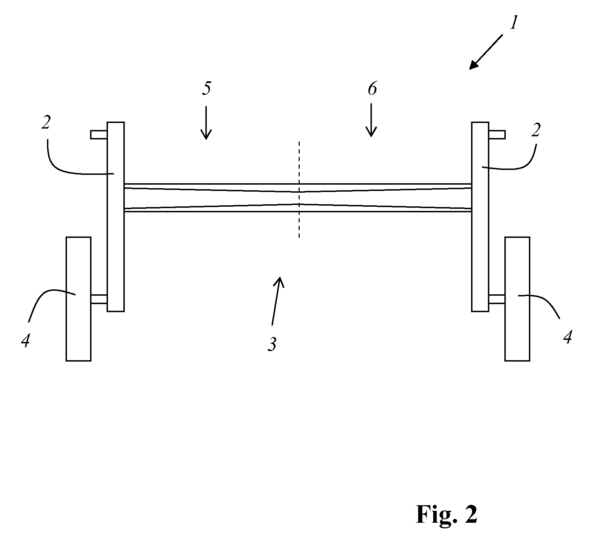

- Fig. 2: eine weitere Verbundlenkerachse mit einem weiteren erfindungsgemäßen Torsionsrohr.

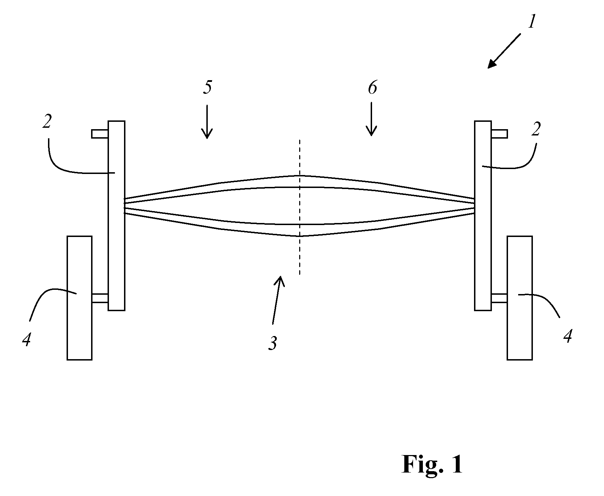

Figur 1 zeigt eine Verbundlenkerachse 1 mit zwei Längsträgern 2, die durch ein erfindungsgemäßes Torsionsrohr 3 miteinander verbunden sind. An den Längsträgern 2 sind drehbar Räder 4 angeordnet. Das Torsionsrohr 3 weist einen ersten Abschnitt 5 und einen zweiten Abschnitt 6 auf. Die Abschnitte 5 und 6 sind derart ausgebildet, dass die dort auftretenden Biegespannungen bei Biegebelastung - und dass gleichzeitig bei Torsionsbelastung die dort auftretenden Torsionsspannungen überall weitgehend gleich sind. Dies wird dadurch erreicht, dass das Torsionsrohr 3 innerhalb der Abschnitte 5 und 6 jeweils unterschiedliche Wandungsdicken - und darüber hinaus unterschiedliche, kontinuierlich ineinander übergehende Querschnittsformen aufweist. Dies ist in der Figur der Anschaulichkeit halber deutlich übertrieben dargestellt. Die Abschnitte 5 und 6 sind bezüglich der durch eine gestrichelte Linie dargestellten Mitte des Torsionsrohres 3 symmetrisch aufgebaut.

Figur 2 zeigt eine andere Ausführungsform einer Verbundlenkerachse 1 mit einem anderen erfindungsgemäßen Torsionsrohr 3. Dieses Torsionsrohr 3 weist überall denselben Außendurchmesser auf. Allerdings variiert über die Längserstreckung der Innendurchmesser, so dass entlang der Längserstreckung unterschiedliche Wandungsdurchmesser und unterschiedliche Querschnittsformen vorliegen. Auch dieses Torsionsrohr 3 weist zwei symmetrisch zur Mitte angeordnete Abschnitte 5 und 6 auf, in denen die Biegespannungen bei Belastung des Torsionsrohres jeweils innerhalb der Abschnitte 5 und 6 weitgehend gleich sind.

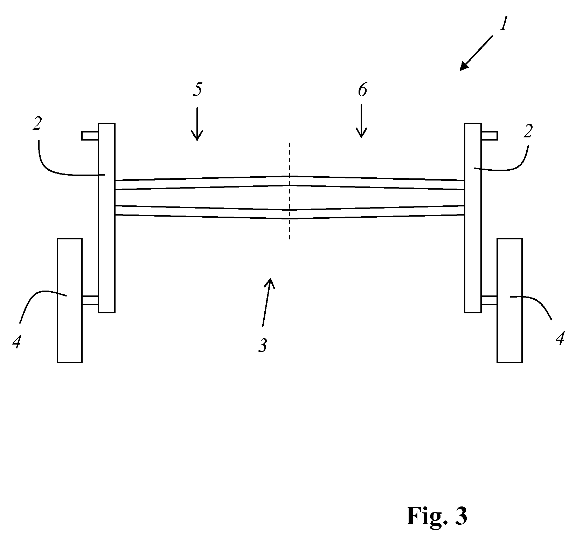

Figur 3 zeigt eine weitere Verbundlenkerachse 1 mit einem weiteren erfindungsgemäßen Torsionsrohr 3, das zwei symmetrisch zur Mitte angeordnete Abschnitte 5 und 6 aufweist, in denen die Biegespannungen bei Belastung des Torsionsrohres jeweils innerhalb der Abschnitte 5 und 6 weitgehend gleich sind. Dieses Torsionsrohr 3 weist innerhalb der Abschnitte 5, 6 jeweils einen sich kontinuierlich verändernden Querschnitt bei gleichbleibender Wandungsdicke auf.

### Bezugszeichenliste

- 1: Verbundlenkerachse
- 2: Längslenker
- 3: Torsionsrohr
- 4: Räder
- 5: erster Abschnitt
- 6: zweiter Abschnitt

## Patentansprüche

1. Torsionsrohr (3) für eine Verbundlenkerachse (1), **dadurch gekennzeichnet, dass** das Torsionsrohr (3) entlang seiner Längserstreckung zumindest einen Abschnitt (5, 6) aufweist, der so ausgebildet ist, dass bei Biegebelastung des Torsionsrohres (3) die Biegespannungen innerhalb des Abschnitts (5, 6) überall weitgehend gleich sind und/oder dass bei Torsionsbelastung des Torsionsrohres (3) die Torsionsspannungen innerhalb des Abschnitts (5, 6) überall weitgehend gleich sind.

2. Torsionsrohr (3) nach Anspruch 1, **dadurch gekennzeichnet, dass** das Torsionsrohr innerhalb des Abschnitts (5, 6) unterschiedliche Wandungsdicken aufweist.

3. Torsionsrohr (3) nach einem der Ansprüche 1 oder 2, **dadurch gekennzeichnet, dass** das Torsionsrohr (3) innerhalb des Abschnitts (5, 6) und/oder innerhalb eines Unterabschnitts des Abschnitts (5, 6) - vorzugsweise kontinuierlich - zunehmende Wandungsdicken aufweist.

4. Torsionsrohr (3) nach Anspruch 1, **dadurch gekennzeichnet, dass** das Torsionsrohr innerhalb des Abschnitts (5, 6) überall dieselbe Wandungsdicke aufweist.

5. Torsionsrohr (3) nach einem der Ansprüche 1 bis 4, **dadurch gekennzeichnet, dass** das Torsionsrohr (3) innerhalb des Abschnitts (5, 6) unterschiedliche Durchmesser aufweist.

6. Torsionsrohr (3) nach einem der Ansprüche 1 bis 5, **dadurch gekennzeichnet, dass** das Torsionsrohr (3) innerhalb des Abschnitts (5, 6) und/oder innerhalb eines Unterabschnitts des Abschnitts (5, 6) - vorzugsweise kontinuierlich - zunehmende Durchmesser aufweist.

7. Torsionsrohr (3) nach einem der Ansprüche 1 bis 6, **dadurch gekennzeichnet, dass** das Torsionsrohr (3) innerhalb des Abschnitts (5, 6) unterschiedliche Querschnittsformen aufweist.

8. Torsionsrohr (3) nach einem der Ansprüche 1 bis 7, **dadurch gekennzeichnet, dass** das Torsionsrohr (3) innerhalb des Abschnitts (5, 6) eine kreisförmige Querschnittsform aufweist.

9. Torsionsrohr (3) nach einem der Ansprüche 1 bis 8, **dadurch gekennzeichnet, dass** das Torsionsrohr (3) entlang der Längserstreckung des Abschnitts (5, 6) kontinuierlich ineinander übergehende Querschnittsformen aufweist.

10. Torsionsrohr (3) nach einem der Ansprüche 1 bis 9, **dadurch gekennzeichnet, dass** der Abschnitt (5, 6) den Mittelbereich des Torsionsrohres (3) bildet.

11. Torsionsrohr (3) nach einem der Ansprüche 1 bis 10, **dadurch gekennzeichnet, dass** das Torsionsrohr (3) zwei symmetrisch zur Mitte angeordnete Abschnitte (5, 6) aufweist, die so ausgebildet sind, dass bei Biegebelastung des Torsionsrohres (3) die Biegespannungen innerhalb jedes Abschnitts (5, 6) überall weitgehend gleich sind und/oder dass bei Torsionsbelastung des Torsionsrohres (3) jeweils die Torsionsspannungen innerhalb jedes Abschnitts (5, 6) überall weitgehend gleich sind.

12. Achse, insbesondere Verbundlenkerachse (1), mit einem Torsionsrohr (3) nach einem der Ansprüche 1 bis 11.
